# EUROPÄISCHE PATENTSCHRIFT

(11) **EP 3 191 728 B1**
(45) Veröffentlichungstag und Bekanntmachung des Hinweises auf die Patenterteilung: **27.11.2019**
(21) Anmeldenummer: 15756937.7
(22) Anmeldetag: 04.09.2015
(51) Int. Cl.: F16D 55/226, F16D 55/2265

(54) **SCHEIBENBREMSE FÜR EIN NUTZFAHRZEUG**
DISK BRAKE FOR A UTILITY VEHICLE
FREIN À DISQUE POUR UN VÉHICULE UTILITAIRE

(30) Priorität: 10.09.2014 DE 102014113054
(43) Veröffentlichungstag der Anmeldung: 19.07.2017
(73) Patentinhaber: KNORR-BREMSE Systeme für Nutzfahrzeuge GmbH, 80809 München (DE)
(72) Erfinder: FISCHL, Tobias, 80336 München (DE)
(86) Internationale Anmeldenummer: PCT/EP2015/070234
(87) Internationale Veröffentlichungsnummer: WO 2016/037937

(56) Entgegenhaltungen:
- DE-A1- 2 414 174
- DE-A1-102007 001 213
- GB-A- 2 033 989
- US-A- 4 382 491

## Beschreibung

Die Erfindung betrifft eine Scheibenbremse für ein Nutzfahrzeug nach dem Oberbegriff des Anspruchs 1.

Der auch als Schiebesattel bezeichnete Bremssattel einer gattungsgemäßen Scheibenbremse (DE 10 2007 001 213 A1) ist mittels mindestens eines Führungsholms an einem fahrzeugseitigen, also ortsfesten Bremsträger gehalten.

Dabei ist der Führungsholm am Bremsträger vorzugsweise durch Verschrauben befestigt und in einer Gleitbuchse eines Gleitlagers des Bremssattels so geführt, dass dieser, bezogen auf eine an einer Achse des Fahrzeugs verdrehsicher gehaltenen Bremsscheibe, axial verschiebbar ist.

Bevorzugt weist der Bremssattel zwei Gleitlager auf, die jeweils in Korrespondenz mit einem zugeordneten Führungsholm stehen, wobei eines der Gleitlager als Festlager mit geringem Gleitspiel ausgebildet ist und einerseits der axialen Führung des Bremssattels und andererseits der Aufnahme beim Bremsen auftretender Kräfte dient.

Hierzu ist das Lagerspiel zwischen dem Führungsholm und der Gleitbuchse so gering wie möglich gehalten sowie zur Aufnahme der Kräfte die Lagerfläche relativ groß dimensioniert, wozu die Lageraufnahme gegenüber einem Sattelkopf des Bremssattels nach außen hin vorsteht.

Allerdings gestaltet sich die Bereitstellung dieser Lageraufnahme relativ problematisch, insbesondere jedoch auch mit erheblichen Kosten verbunden.

Da der Bremssattel üblicherweise aus Gusseisen besteht, wird die Geometrie der Lageraufnahme bislang über einen entsprechenden Kern beim Gießen des Bremssattels vorgeformt. Um nachfolgend die den Führungsholm aufnehmende Gleitbuchse einbringen zu können, die reibschlüssig, d.h. durch Presssitz, in der Lagerbohrung der Lageraufnahme gehalten ist, ist eine spanende Bearbeitung der Lagerbohrung über die gesamte Lagerlänge erforderlich.

Naturgemäß ist dies mit entsprechend hohen Fertigungskosten verbunden. Überdies ist ein Materialeinsatz erforderlich, um die Lageraufnahme auszubilden, was ebenso einer stets geforderten Kostenoptimierung entgegensteht, wie die genannte spanende Bearbeitung der Lagerbohrung über die gesamte Länge der Lageraufnahme.

In der DE 24 14 174 A1 ist eine Scheibenbremse offenbart, bei der die Lageraufnahme aus abständig zueinander angeordneten Stützabschnitten besteht. Dabei ragen die Stützabschnitte als Kragarme über den Bremssattel vor.

Aus der GB 2 033 989 A ist eine Scheibenbremse bekannt, deren Bremssattel, jedem Führungsholm zugeordnet zwei abständig zueinander angeordnete Stützabschnitte aufweist, von denen einer im Bereich des Sattelkopfes und der andere im Bereich des Sattelrückens angeformt ist.

Eine vergleichbare Konstruktion gibt die US 4 382 491 A wieder, die eine Scheibenbremse thematisiert, bei der der Bremssattel dem jeweiligen Führungsholm zugeordnet, im Bereich des Sattelkopfes und im Bereich des Sattelrückens jeweils einen angeformten Stützabschnitt aufweist, in denen der Führungsholm gelagert ist.

Der Erfindung liegt die Aufgabe zugrunde, eine Scheibenbremse der gattungsgemäßen Art so weiterzuentwickeln, dass sie einfacher und kostengünstiger herstellbar ist und ihre Funktionssicherheit verbessert wird.

Diese Aufgabe wird durch eine Scheibenbremse mit den Merkmalen des Anspruchs 1 gelöst.

Die erfindungsgemäße Scheibenbremse, bei der die Lageraufnahme aus abständig zueinander angeordneten Stützabschnitten besteht, vorzugsweise aus zwei Stützabschnitten und zwar bei gleichem Längenabmaß wie bisher die beiden Enden der Lageraufnahme bildend, ermöglicht eine deutlich vereinfachte Herstellung zunächst beim Gießen, da ein wesentlich kleinerer Kern eingesetzt werden kann. Im Weiteren hinsichtlich der spanenden Bearbeitung der Lagerbohrung, die sich in den beiden Stützabschnitten befindet, wobei diese in ihrer

Breite gering bemessen sein können und lediglich entsprechend den aufzunehmenden Kräften zu dimensionieren sind.

Auch eine deutliche Materialeinsparung im Bereich der Lageraufnahme führt zu einer Kostenreduzierung, so dass sich insgesamt eine hinsichtlich der Kostenstruktur durchaus bemerkenswerte Verbesserung ergibt. Dies vor allem auch unter dem Gesichtspunkt, dass Scheibenbremsen in großen Stückzahlen hergestellt werden und Verwendung finden.

Der steten Forderung nach einer Gewichtseinsparung trägt die neue Scheibenbremse ebenfalls Rechnung.

Nach der spanenden Bearbeitung der beiden Stützabschnitte wird in die vorhandene Lagerbohrung eine Gleitbuchse eingesetzt, die zur axialen Verschiebesicherung endseitig verstemmt bzw. umgebördelt werden. Zwar besteht die Möglichkeit, bei Einhaltung eines Untermaßes der Lagerbohrung die Gleitbuchse wie bisher einzupressen, d.h. reibschlüssig zu halten, jedoch reicht im Regelfall die endseitige Umformung der Gleithülse aus, um diese sicher zu halten, d.h. enge Toleranzen, wie sie bei einem Presssitz erforderlich sind, sind hier nicht zwingend.

Im Übrigen besteht die Gleitbuchse aus einem Metallmantel, der im Kontaktbereich mit dem Führungsholm beschichtet ist, beispielsweise im Sinne eines DU-Lagers.

Im Übrigen ist zu erwähnen, dass die Geometrie der Lageraufnahme nun nicht mehr über einen Kern vorgeformt werden muss, so dass ein um fast die Hälfte kleinerer Kern eingesetzt werden kann, was die Ausbringung des Bremssattels deutlich verbessert.

Die Anbindung der Stützabschnitte erfolgt jeweils direkt an einem eine Aufnahmekammer für Funktionsteile umhüllenden Gehäuse des Bremssattels, das an den Kopf angeformt ist. Damit wird eine ausreichende Stabilität gewährleistet, mit der Folge, dass beim Bremsen auftretende Kräfte quasi ohne Verformung der Stützabschnitte aufgenommen werden können, ebenso wie selbstverständlich die Belastungen der Lagerung des Bremssattels selbst.

Nach einem weiteren Gedanken der Erfindung sind die Stützabschnitte in dem die Gleitbuchse umgreifenden Bereich jeweils spiegelsymmetrisch ausgebildet, bezogen auf eine Achse quer zur Mittelachse der Lagerbohrungen.

Dabei sind die außen liegenden, d.h. einander abgewandten Endbereiche der Stützabschnitte jeweils mit einem Freistich versehen, in dem sich ein umlaufender, radial nach außen gerichteter Kragen der Gleitbuchse abstützt.

Auf der dem Bremsträger zugewandten Seite kann die Gleitbuchse und der zugeordnete Stützabschnitt so modifiziert sein, dass ein Balg befestigbar ist, der andererseits am Bremsträger angeschlossen ist und durch den ein frei liegender Bereich des Führungsholms zwischen der Lageraufnahme und dem Bremsträger geschützt wird.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine Bremssattel einer erfindungsgemäßen Scheibenbremse in einer perspektivischen Unteransicht
- Figur 2: einen Teilausschnitt des Bremssattels teilkomplettiert

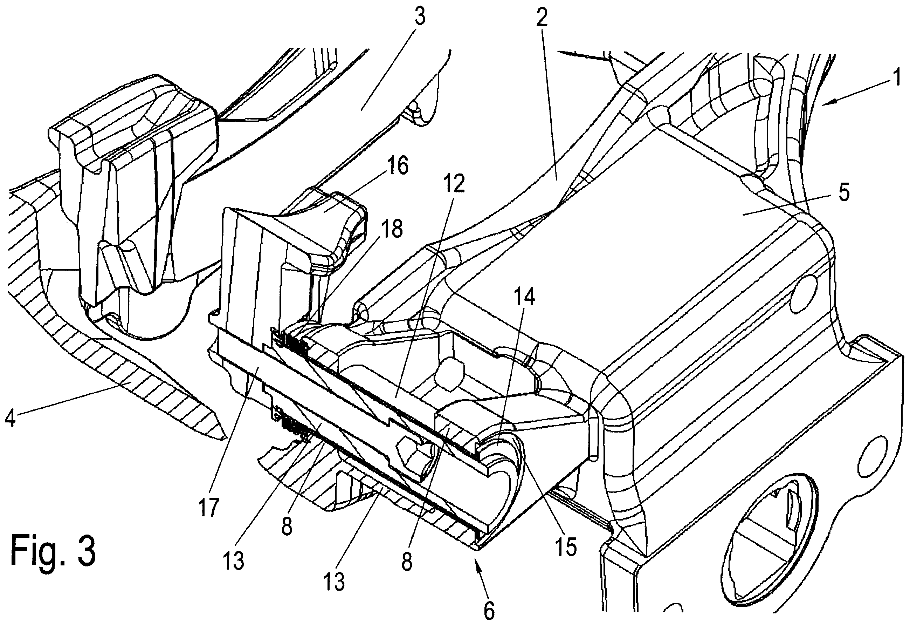

- Figur 3: einen Teilausschnitt des Bremssattels weiter komplettiert, gleichfalls in einer perspektivischen, teilweise geschnittenen Unteransicht

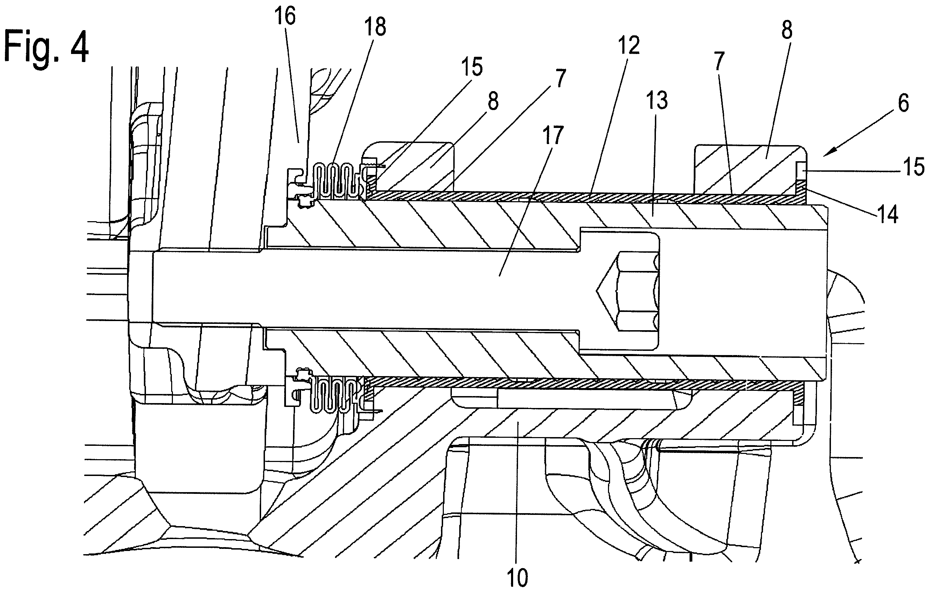

- Figur 4: eine vergrößerte Seitenansicht eines Teilbereichs des Bremssattels nach Figur 3.

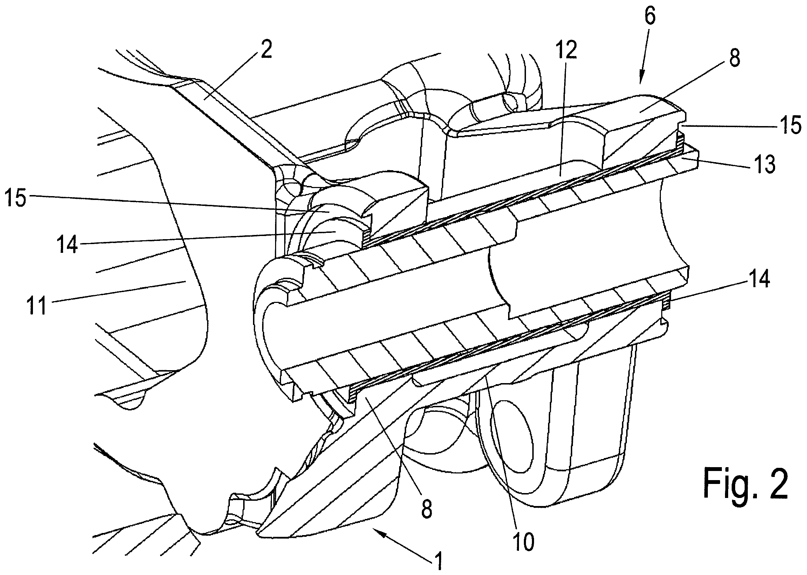

In den Figuren ist in Unteransicht ein Bremssattel 1 einer Scheibenbremse für ein Nutzfahrzeug dargestellt, der in Funktion, also in montierter Stellung, eine fahrzeugseitige Bremsscheibe überspannt und der mittels mindestens eines Führungsholms 13 (Figur 2) an einem ortsfesten Bremsträger 16 befestigt ist. Der Bremssattel 1 weist einen Sattelkopf 2, einen Sattelrücken 3 sowie zwei diese miteinander verbindende, parallel und abständig zueinander verlaufende Zugstreben 4 auf. Dabei ist der Bremssattel 1, bezogen auf die Bremsscheibe, axial verschiebbar gelagert, wozu der Führungsholm 13 in einer im Bremssattel 1 gehaltenen Gleitbuchse 12 geführt ist.

Diese wiederum ist verschiebegesichert in einer Lagerbohrung 7 einer Lageraufnahme 6 des Bremssattels 1 gehalten, wobei sie bevorzugt aus Metall besteht, mit einer gleitfähigen Innenbeschichtung, an der der Führungsholm 13 anliegt, der im Übrigen mittels einer Schraube 17 im Bremsträger 16 befestigt ist.

Gemäß der Erfindung besteht die Lageraufnahme 6 aus abständig zueinander angeordneten Stützabschnitten 8, von denen im Ausführungsbeispiel und bevorzugt zwei vorgesehen sind, die jeweils die beiden Endbereiche der Lageraufnahme 6 bilden.

Diese Stützabschnitte 8 sind stegförmig ausgebildet und an ein Gehäuse 5 angeformt, das an den Sattelkopf 2 angegossen ist und das eine Aufnahmekammer 11 für Funktionsteile, insbesondere eine Zuspanneinrichtung, umhüllt.

Die Stützabschnitte 8 sind parallel zueinander angeordnet und weisen jeweils einen Abschnitt der Lagerbohrung 7 auf. Um eine ausreichende Steifigkeit zu erreichen, sind die Stützabschnitte 8 durch einen Steg 9 verbunden, der auf der dem Gehäuse 5 gegenüberliegenden Seite angeformt ist und der in einen Flansch 10 übergeht, der gleichfalls am Gehäuse 5 befestigt ist.

Zur Verschiebesicherung der Gleitbuchse 12 sind deren Enden nach einem Einschieben in die Lagerbohrung 7 jeweils zu einem Kragen 14 verformt, die in Freischnitten 15 der Stützabschnitte 8 einliegen, wobei diese Freischnitte 15 auf den einander abgewandten Seiten der beiden Stützabschnitte 8 angebracht sind.

Auf der dem Bremsträger 16 zugewandten Seite ist an den zugeordneten Stützabschnitt 8 ein Faltenbalg 18 angeschlossen, der andererseits am Bremsträger 16 befestigt ist und durch den der frei liegende Abschnitt des Führungsholms 13 zum Schutz vor Umgebungseinflüssen abgedichtet ist.

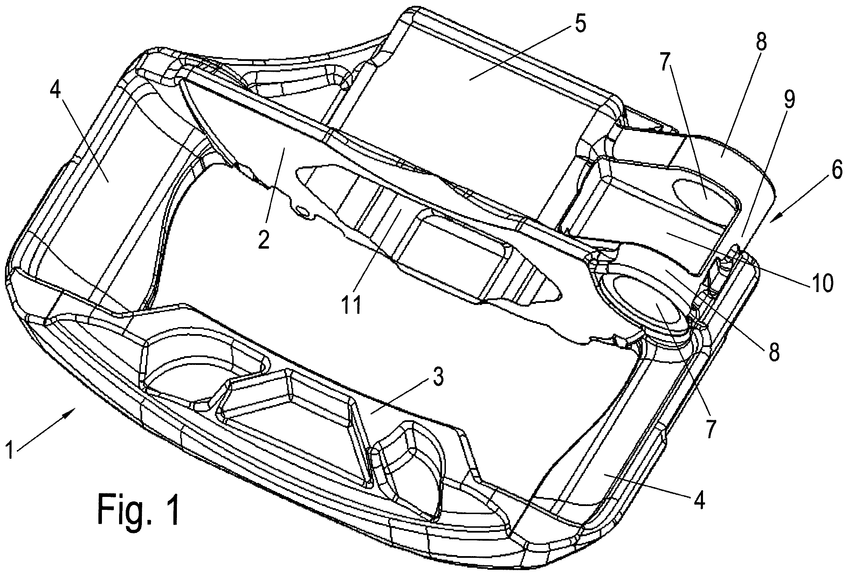

Wie insbesondere die Figur 1 sehr deutlich wiedergibt, geht der Steg 9 unterbrechungslos über zu einer Verlängerung der Zugstrebe 4, wodurch sich eine insgesamt, unter Berücksichtigung der Anbindung der Stützabschnitte 8 am Gehäuse 5, äußerst stabile Konfiguration ergibt.

### Bezugszeichenliste

- 1: Bremssattel
- 2: Sattelkopf
- 3: Sattelrücken
- 4: Zugstrebe
- 5: Gehäuse
- 6: Lageraufnahme
- 7: Lagerbohrung
- 8: Stützabschnitt
- 9: Steg
- 10: Flansch
- 11: Aufnahmekammer
- 12: Gleithülse
- 13: Führungsholm
- 14: Kragen
- 15: Freistich
- 16: Bremsträger
- 17: Schraube
- 18: Faltenbalg

## Patentansprüche

1. Scheibenbremse für ein Nutzfahrzeug, mit einem eine Bremsscheibe überspannenden, aus Gusseisen bestehenden Bremssattel (1), der einen Sattelkopf (2) und einen Sattelrücken (3) sowie zwei, diese miteinander verbindende, parallel und abständig zueinander verlaufende Zugstreben (4) aufweist und der mittels mindestens eines an einem ortsfesten Bremsträger (16) befestigten Führungsholm (13), bezogen auf die Bremsscheibe, axial verschiebbar gelagert ist, wobei der Führungsholm (13) in einer Gleitbuchse (12) geführt ist, die in einer Lagerbohrung (7) einer Lageraufnahme (6) des Bremssattels (1) verschiebegesichert gehalten ist, **dadurch gekennzeichnet, dass** die Lageraufnahme (6) aus in axialer Richtung des Führungsholms (13) abständig zueinander angeordneten Stützabschnitten (8) besteht, die jeweils direkt an einem eine Aufnahmekammer (11) für Funktionsteile umhüllenden Gehäuse (5) des Bremssattels (1) angeformt sind.

2. Scheibenbremse nach Anspruch 1, **dadurch gekennzeichnet, dass** zwei Stützabschnitte (8) vorgesehen sind, die, bezogen auf die bekannte Länge der Lageraufnahme (6) die beiden sich gegenüberliegenden Endbereiche bilden.

3. Scheibenbremse nach Anspruch 1 oder 2, **dadurch gekennzeichnet, dass** die Gleitbuchse (12), die einen metallischen Mantel und eine gleitfähige Innenbeschichtung aufweist, an ihren beiden Enden zu einem radial nach außen gerichteten, umlaufenden Kragen (14) geformt ist, der an der jeweiligen Außenseite des zugeordneten Stützabschnitts (8) anliegt.

4. Scheibenbremse nach einem der vorhergehenden Ansprüche, **dadurch gekennzeichnet, dass** die Gleitbuchse (12) formschlüssig in der Lagerbohrung (7) axial gesichert gehalten ist.

5. Scheibenbremse nach einem der vorhergehenden Ansprüche, **dadurch gekennzeichnet, dass** die Gleitbuchse (12) an ihren beiden Enden verstemmt oder umgebördelt ist.

6. Scheibenbremse nach einem der Ansprüche 3 bis 5, **dadurch gekennzeichnet, dass** der jeweilige Kragen (14) in einem Freischnitt (15) des Stützabschnitts (8) einliegt.

7. Scheibenbremse nach einem der Ansprüche 2 bis 6, **dadurch gekennzeichnet, dass** die beiden Stützabschnitte (8) an ein eine Aufnahmekammer (11) für Funktionsteile umhüllendes Gehäuse (5) angeformt sind und dass auf der dem Gehäuse (5) gegenüberliegenden Seite die Stützabschnitte (8) durch einen Steg (9) miteinander verbunden sind.

8. Scheibenbremse nach Anspruch 7, **dadurch gekennzeichnet, dass** der Steg (9) in einen mit dem Gehäuse (5) verbundenen Flansch (10) übergeht.

9. Scheibenbremse nach einem der vorhergehenden Ansprüche, **dadurch gekennzeichnet, dass** der dem Bremsträger (16) zugewandte Stützabschnitt (8) einen Faltenbalg (18) trägt, der andererseits am Bremsträger (16) angeschlossen ist und der den Führungsholm (13) im Bereich zwischen dem Stützabschnitt (8) und dem Bremsträger (16) umhüllt.

10. Scheibenbremse nach einem der vorhergehenden Ansprüche, **dadurch gekennzeichnet, dass** die Stützabschnitte (8), bezogen auf eine quer zu ihrer Mittelachse verlaufende Achse spiegelsymmetrisch ausgebildet sind.

## Claims

1. Disc brake for a commercial vehicle, having a brake calliper (1), which spans a brake disc, is made of cast iron and has a calliper head (2) and a calliper back (3) and two connecting diagonal ties (4) extending parallel to and at a distance from each other, and which is mounted for axial displacement with respect to the brake disc by means of at least one guide bar (13) fixed to a stationary adapter (16), wherein the guide bar (13) is guided in a sliding bushing (12) held in a manner securing it against displacement in a bearing bore (7) of a bearing receptacle (6) of the brake calliper (1), **characterised in that** the bearing receptacle (6) consists of supporting sections (8), which are arranged at a distance from one another in the axial direction of the guide bar (13) and each of which is directly formed integrally at a housing (5) of the brake calliper (1) which encases a reception chamber (11) for functional components.

2. Disc brake according to claim 1, **characterised in that** two supporting sections (8) are provided, which, relative to the known length of the bearing receptacle (6), form the two opposite end regions.

3. Disc brake according to claim 1 or 2, **characterised in that** the sliding bushing (12), which has a metallic outer surface and a slidable inner coating, is at its both ends shaped in the form of a continuous collar (14), which is oriented radially outwards and bears against the respective outside of the associated supporting section (8).

4. Disc brake according to any of the preceding claims, **characterised in that** the sliding bushing (12) is positively held and axially secured in the bearing bore (7).

5. Disc brake according to any of the preceding claims, **characterised in that** the sliding bushing (12) is peened or crimped at its both ends.

6. Disc brake according to any of claims 3 to 5, **characterised in that** the respective collar (14) lies in an ease-off (15) of the supporting section (8).

7. Disc brake according to any of claims 2 to 6, **characterised in that** the two supporting sections (8) are integrally formed at a housing (5) enclosing a reception chamber (11) for functional components, and **in that** the supporting sections (8) are joined to each other by a web (9) on the side opposite the housing (5).

8. Disc brake according to claim 7, **characterised in that** the web (9) merges into a flange (10) joined to the housing (5).

9. Disc brake according to any of the preceding claims, **characterised in that** the supporting section (8) facing the adapter (16) carries a bellows (18), the other side of which is connected to the adapter (16) and which encases the guide bar (13) in the region between the supporting section (8) and the adapter (16).

10. Disc brake according to any of the preceding claims, **characterised in that** the supporting sections (8) are designed to be mirror-symmetrical with respect to an axis extending transversely to its central axis.

## Revendications

1. Frein à disque d'un véhicule utilitaire, comprenant un étrier (1) de frein en fonte, qui chevauche un disque de frein et qui a une tête (2) et un dos (3), ainsi que deux tirants (4) reliant ceux-ci entre eux et s'étendant parallèlement et à distance l'un de l'autre et qui, au moyen d'au moins un longeron (13) de guidage fixé à un support (16) de frein à poste fixe, est monté coulissant axialement par rapport au disque de frein, le longeron (13) de guidage étant guidé dans un manchon (12) glissant, qui est maintenu, sans possibilité de déplacement, dans un alésage (7) de palier d'un logement (6) de palier de l'étrier (1) de frein, **caractérisé en ce que** le logement (6) de palier est constitué de tronçons (8) d'appui, qui sont disposés à distance les uns des autres dans la direction axiale du longeron (13) de guidage et qui sont formés chacun directement sur une enveloppe (5), enveloppant une chambre (11) de réception de parties fonctionnelles de l'étrier (1) de frein.

2. Frein à disque suivant la revendication 1, **caractérisé en ce qu'**il est prévu deux tronçons (8) d'appui, qui forment, rapporté à la longueur connue du logement (6) de palier, les deux parties d'extrémité en opposition.

3. Frein à disque suivant la revendication 1 ou 2, **caractérisé en ce que** le manchon (12) glissant, qui a une surface latérale métallique et un revêtement intérieur apte à glisser, est formé à ses deux extrémités en un collet (14) faisant le tour et dirigé vers l'extérieur radialement, qui s'applique à la face extérieure respective du tronçon (8) d'appui associé.

4. Frein à disque suivant l'une des revendications précédentes, **caractérisé en ce que** le manchon (12) glissant est retenu, sans possibilité de déplacement axial, à complémentarité de forme, dans l'alésage (7) de palier.

5. Frein à disque suivant l'une des revendications précédentes, **caractérisé en ce que** le manchon (12) glissant est maté ou rabattu à ses deux extrémités.

6. Frein à disque suivant l'une des revendications 3 à 5, **caractérisé en ce que** le collet (14) respectif pénètre dans un dégagement (15) du tronçon (8) d'appui.

7. Frein à disque suivant l'une des revendications 2 à 6, **caractérisé en ce que** les deux tronçons (8) d'appui sont formés sur une enveloppe (5) enveloppant une chambre (11) de réception de parties fonctionnelles et **en ce que**, du côté opposé à l'enveloppe (5), les tronçons (8) d'appui sont reliés entre eux par une entretoise (9).

8. Frein à disque suivant la revendication 7, **caractérisé en ce que** l'entretoise (9) se transforme en une bride (10) reliée à l'enveloppe (5).

9. Frein à disque suivant l'une des revendications précédentes, **caractérisé en ce que** le tronçon (8) d'appui, tourné vers le support (16) de frein, porte un soufflet (18) à plis, qui est raccordé, d'autre part, au support (16) de frein et qui enveloppe le longeron (13) de guidage dans la partie entre le tronçon (8) d'appui et le support (16) de frein.

10. Frein à disque suivant l'une des revendications précédentes, **caractérisé en ce que** les tronçons (8) d'appui sont symétriques comme en un miroir par rapport à un axe s'étendant transversalement à leur axe médian.
